## Europäisches Patentamt
## European Patent Office
## Office européen des brevets

(19)

(11) Veröffentlichungsnummer: **0 000 012 B1**

(12) **EUROPÄISCHE PATENTSCHRIFT**

(21) Anmeldenummer: **78100020.3**

(22) Anmeldetag: **01.06.78**

(51) Int. Cl.³: **F 16 K 11/04, F 16 K 15/06**

(54) **Bypassventil für Pumpen und Heizungsanlagen.**

(30) Priorität: **03.06.77 DE 2725044**
**27.01.78 DE 7802444 U**

(43) Veröffentlichungstag der Anmeldung:
**20.12.78 Patentblatt 78/01**

(45) Bekanntmachung des Hinweises auf die Patenterteilung:
**09.01.80 Patentblatt 80/01**

(84) Benannte Vertragsstaaten: **BE CH FR GB NL SE**

(56) Entgegenhaltungen:
**CH – A – 85 744**
**CH – A – 204 955**
**DE – A – 1 906 305**
**DE – A – 2 504 292**
**DE – B – 1 194 663**
**FR – A – 1 130 209**
**NL – C – 108 152**
**US – A – 2 619 979**
**US – A – 3 559 670**

(73) Patentinhaber: **Gebr. Tuxhorn,**
**Westfalenstrasse 36,**
**D–4800 Bielefeld 14 (DE)**

(72) Erfinder: **Nolte, Ewald,**
**Auf der Siegenegge 18,**
**D–4800 Bielefeld 14 (DE)**

(74) Vertreter: **Loesenbeck, Otto, Dr.,**
**Herforder Strasse 17,**
**D–4800 Bielefeld 1 (DE)**

**Anmerkung:** Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 000 012 B1

Bypassventil für Pumpen und Heizungsanlagen

Die Erfindung bezieht sich auf ein Bypassventil für Pumpen und Heizungsanlagen mit einem Steuerelement, das zwei in der Größe unterschiedliche, über eine Stange verbundene Ventilteller aufweist, die Ventilteller und die sie verbindende Stange in der Achsrichtung der Ein- und Auslaßanschlüsse bewegbar gelagert sind und der Ventilteller des Bypassventils den kleineren Durchmesser aufweist.

Es ist ein Bypassventil dieser Art bekannt (DE-OS 2504292), bei dem dem größeren Ventilteller des Steuerelements ein ringförmiger Ventilsitz zugeordnet ist. Bei vollständig geöffnetem Bypass liegt der größere Ventilteller am ringförmigen Ventilsitz an. Sofern sich der größere Ventilteller des Steuerelements vom Ventilsitz abhebt, entstehen im Bereich des Ventilsitzes Strömungswirbel, die auf den größeren Ventilteller wirken und Störgrößen darstellen, die nicht berechnet werden können.

Durch den Ventilsitz für den größeren Ventilteller wird der Strömungswiderstand bei geschlossenem Bypass erhöht.

Der Erfindung liegt die Aufgabe zugrunde, bei einem solchen Bypassventil die Gehäusekonstruktion fertigungstechnisch zu vereinfachen und den Strömungswiderstand bei geschlossenem Bypass zu verringern.

Diese Aufgabe wird nach der Erfindung dadurch gelöst, daß zwischen dem Außenrand des größeren Tellers des Steuerelements und der Gehäusewand in allen Ventilstellungen ein ringförmiger Strömungsquerschnitt vorhanden ist und der Gehäuseinnenraum sich in der Flußrichtung hinter der Einlaßöffnung zum Bypass bis in den Bereich der Endstellung des größeren Tellers bei vollständig geöffnetem Bypass verjüngt und der Gehäuseinnenraum sich anschließend bis in den Bereich der Endstellung des größeren Tellers bei geschlossenem Bypass erweitert.

Bei geöffnetem Bypass ist der ringförmige Strömungsquerschnitt zwischen dem äußeren Rand des größeren Tellers und der Gehäusewand klein. Durch die Gehäuseverjüngung wird die durch das Gehäuse strömende Flüssigkeit auf den größeren Teller ausgerichtet. Auf dem Weg des größeren Tellers in die in Flußrichtung vorn liegende Endstellung vergrößert sich der ringförmige Strömungsquerschnitt zwischen dem Rand des größeren Tellers und dem Gehäuse. In diesem Bereich wird also dem Umströmen des größeren Tellers, der als Mitnehmerscheibe wirkt, ein geringerer Widerstand entgegengesetzt.

Durch die erfindungsgemäße Gehäusegestaltung wird im Ventilgehäuse in allen Betriebsstellungen des Steuerelements ein günstiger Strömungsverlauf erzielt.

Nachfolgend ist ein in den Zeichnungen dargestelltes Ausführungsbeispiel beschrieben. Es zeigen:

Fig. 1 ein Bypassventil im Längsschnitt bei geschlossener Bypassöffnung,

Fig. 2 das Ventil nach der Fig.1 mit geöffnetem Bypass und

Fig. 3 ein Diagramm.

Das Ventilgehäuse 1 weist drei Anschlüsse auf, die durch Richtungspfeile gekennzeichnet sind, und zwar den Eintritt 2, den Austritt 3 und den Bypass 4.

Das Ventil ist mit einem Steuerelement 5 ausgerüstet, das aus einem kleineren Ventilteller 6 des Bypassventils, einem Ventilteller 7 mit einem größeren Durchmesser als der Ventilteller 6 und einer Verbindungsstange 8 besteht. Das Steuerelement ist in der Durchflußrichtung des Ventils bewegbar gelagert. Die Lagerung der Verbindungsstange 8 ist in den Figuren nicht aufgezeigt.

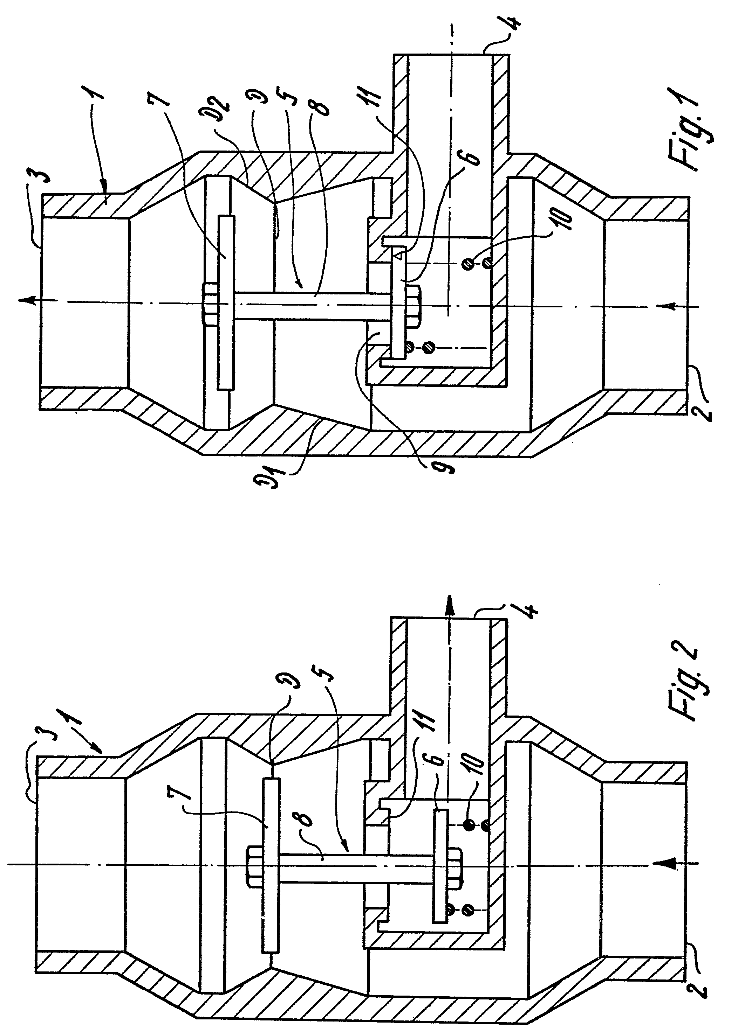

Zwischen dem Außenrand des größeren Tellers 7 und der Gehäuseinnenwandung ist ständig ein ringförmiger Strömungsquerschnitt vorhanden, der sich bei der Bewegung des Steuerelements in Flußrichtung des Gehäuses aufgrund der gewählten und in den Fig. 1 und 2 aufgezeigten Innenkontur des Gehäuses ändert.

Der Gehäuseinnenraum verjüngt sich konisch in der Flußrichtung hinter der Einlaßöffnung 9 zum Bypass bis in den Bereich der Endstellung des größeren Tellers 7 bei geöffnetem Bypass. Diese Stellung des größeren Tellers ist in der Fig. 2 aufgezeigt. Der konischen Verjüngung des Gehäuseinnenraums ist das Bezugszeichen D1 zugeordnet.

Der Gehäuseinnenraum ist an der Stelle der größten Verjüngung mit D bezeichnet. Von dieser Stelle aus erweitert sich das Gehäuse konisch in Flußrichtung, und zwar bis zu der Endlage des größeren Ventiltellers 7 bei geschlossenem Bypass. Diese Lage des Ventiltellers 7 ist in der Fig. 1 dargestellt. Der beschriebenen konischen Erweiterung des Gehäuses ist das Bezugszeichen D2 zugeordnet.

Von der Endlage des Ventiltellers 7 bei geschlossenem Bypass bis zum Austrittsstutzen verjüngt sich der Gehäuseinnenraum wieder konisch.

Dem Ventilteller 6 ist eine Schließfeder 10 zugeordnet, die an der Unterseite des Ventiltellers angreift und sich am anderen Ende an einer Fläche der Bypassleitung abstützt. Durch die Feder 10 wird der Ventilteller 6 an den Ventilsitz 11 gedrückt und in dieser Stellung gehalten.

Zwischen dem Eintritt und dem Austritt gibt es keine verschließbare Öffnung und keine wesentliche Druckdifferenz. Das Ventilgehäuse 1 wird in gerader Richtung vom Medium durchströmt. Die Feder 10 ist so bemessen, daß sie den Bypass in Ruhestellung schließt (Fig. 1), aber auf die Steuerung keinen Einfluß hat. Bei geöffneter Austrittsleitung wirkt die Kraft des durchströmenden Mediums auf den größeren Ventilteller 7. Die Kraft überträgt sich auf den Ventilteller 6 und hält den Bypass geschlossen.

Bei einer Verringerung der Abnahmemenge werden die Flußgeschwindigkeit sowie die auf den Ventilteller 7 einwirkenden Kräfte verringert. Sobald zwischen den auf den Ventilteller 7 und den auf den Ventilteller 6 einwirkenden Kräften ein Ausgleich eintritt, beginnt der Bypass zu öffnen. Bei einer weiteren Verringerung der Abnahmemenge verschiebt sich das Steuerelement 5 gegen die Flußrichtung und öffnet den Bypass in gleichem Verhältnis, in dem die Abnahmemenge verringert wird. Der Übergang ist stufenlos und kann in jeder Stellung zeitlich unbegrenzt gehalten werden.

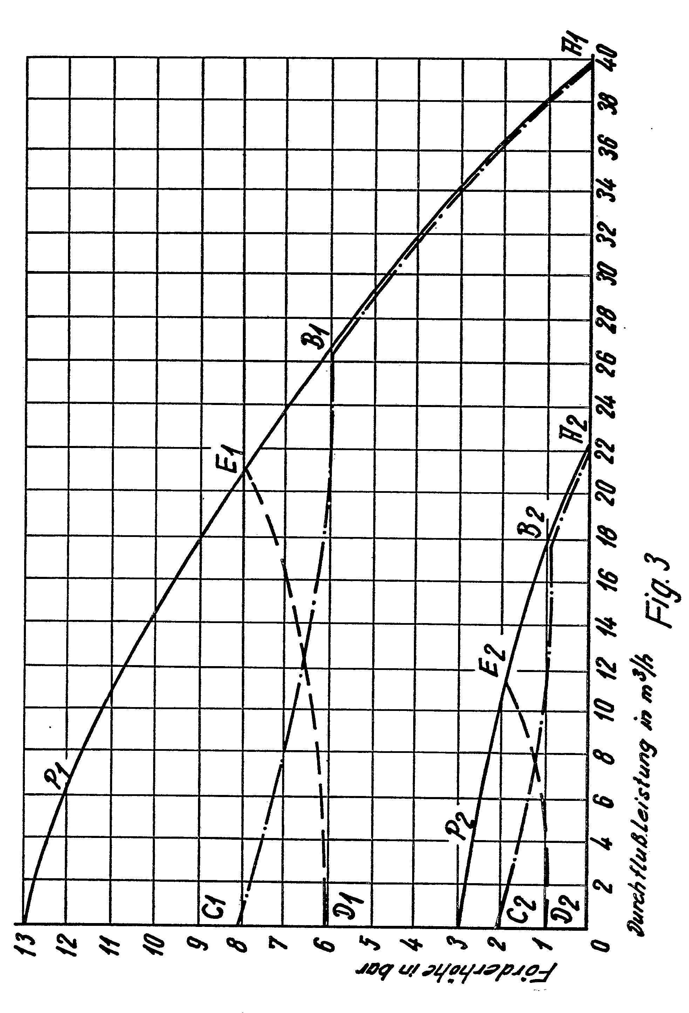

Im Diagramm nach der Fig. 3 sind die Leistungen eines Bypassventils in der Größe 2" dargestellt, und zwar beim Einsatz in zwei verschiedenen Anlagen mit unterschiedlich starken Pumpen.

Bei vollständig geöffneter Austrittsleitung ist die Abnahmemenge gleich der Fördermenge (sh. Punkt A1 bzw. A2). Wird die Abnahmemenge verringert, so verläuft die Kurve der Abnahmemenge parallel zur Pumpenkennlinie bis zum Punkt B1 bzw. B2. Vom Punkt B1 bzw. B2 läßt sich die Abnahmemenge stufenlos bis auf den Wert Null (sh. Punkt C1 bzw. C2) verringern, während der Bypassdurchfluß sich gleichzeitig vom Punkt D1 bzw. D2 bis auf den Punkt E1 bzw. E2 erhöht. Zwischen den Punkten B und C kann jeder beliebige Punkt angesteuert und auf unbegrenzte Zeit gehalten werden. Die Lage der Punkte B und E auf der Pumpenkennlinie wird durch das Größenverhältnis des Ventiltellers 7 zum Ventilteller 6 konstruktiv festgelegt.

## Patentansprüche

1. Bypassventil für Pumpen und Heizungsanlagen mit einem Steuerelement, das zwei in der Größe unterschiedliche, über eine Stange verbundene Ventilteller aufweist, die Ventilteller und die sie verbindende Stange in der Achsrichtung der Ein- und Auslaßanschlüsse bewegbar gelagert sind und der Ventilteller des Bypassventils den kleineren Durchmesser aufweist, dadurch gekennzeichnet, daß zwischen dem Außenrand des größeren Tellers (7) des Steuerelements (5) und der Gehäusewand in allen Ventilstellungen ein ringförmiger Strömungsquerschnitt vorhanden ist und der Gehäuseinnenraum sich in der Flußrichtung hinter der Einlaßöffnung (9) zum Bypass bis in den Bereich der Endstellung des größeren Tellers bei vollständig geöffnetem Bypass verjüngt und der Gehäuseinnenraum sich anschließend bis in den Bereich der Endstellung des größeren Tellers bei geschlossenem Bypass erweitert.

2. Bypassventil nach Anspruch 1, dadurch gekennzeichnet, daß die Verjüngung und die Erweiterung konisch verlaufen.

3. Bypassventil nach Anspruch 1 oder 2, dadurch gekennzeichnet, daß dem Bypassventilteller eine in Schließrichtung wirkende Feder (10) zugeordnet ist.

## Claims

1. Bypass valve for pumps and heating plants, including a control member with two valve disks of different sizes interconnected by a rod, the valve disks and the rod interconnecting said valve disks being movably mounted in axial direction of the inlet and outlet connectors, and the valve disk of the bypass valve being of a smaller diameter, characterized in that in all positions of the valve there is available an annular cross-section between the outer periphery of the larger disk (7) of the control member (5) and the housing inner wall, the internal housing cavity downstream of the inlet port (9) at the bypass converges in flow direction up to the region of the limit position of the larger disk when the bypass is in its fully opened position, and from this point onwards diverges up to the region of the limit position of the larger disk when the bypass is in its closed position.

2. Bypass valve according to claim 1, characterized in that the converging and diverging portions are each of a conical configuration.

3. Bypass valve according to claim 1 or 2, characterized in that with the bypass valve disk is associated a spring (10) operative in closing direction.

## Revendications

1. Clapet à by-pass pour pompes et installations de chauffage, comportant un élément de commande de l'écoulement du fluide qui est constitué par deux obturateurs plats de grandeurs différentes reliés l'un à l'autre par une tige, les obturateurs et la tige qui les relie étant montés déplaçables dans la direction de l'axe des orifices d'entrée et de sortie et l'obturateur plat de fermeture du by-pass étant celui qui a le plus petit diamètre, caractérisé en ce qu'il existe entre le bord périphérique du plus grand obturateur (7) et la paroi du corps de clapet, dans toutes les positions de l'élément de commande (5), un passage de section annulaire pour l'écoulement du fluide, et en ce que l'espace intérieur du dit corps se rétrécit progressivement en aval de l'orifice (9) d'entrée dans le by-pass, dans le sens d'écoulement du fluide, jusque dans la zone correspondant à la position extrême prise par le grand obturateur lorsque le by-pass est complètement ouvert, puis s'élargit progressivement jusque dans la zone correspondant à la position prise par ce même obturateur lorsque le by-pass est fermé.

2. Clapet à by-pass selon la revendication 1, caractérisé en ce que le rétrécissement et l'élargissement sont coniques.

3. Clapet selon la revendication 1 ou la revendication 2, caractérisé en ce qu'un ressort de fermeture (10) est associé à l'obturateur qui commande l'entrée dans le by-pass.

Fig. 1

Fig. 2

Fig. 3